# EUROPEAN PATENT APPLICATION

(11) **EP 1 164 787 A2**
(43) Date of publication of application: **19.12.2001**
(21) Application number: 01114492.0
(22) Date of filing: 15.06.2001
(51) Int. Cl.: H04N 5/268

(54) **Video transmission apparatus**

(30) Priority: 15.06.2000 JP 2000179786
(71) Applicant: NEC CORPORATION, Tokyo (JP)
(72) Inventor: Sezaki, Isao, c/o NEC IC Microcomputer Syst.,Ltd., Kawasaki-shi, Kanagawa (JP)
(74) Representative: Glawe, Delfs, Moll

(57) **Abstract**

A video transmission apparatus in which an n (the n represents an integer of 2 or more) number of different video data (13), (15), (17), (19) are transmitted via a single transmission line (8) from a plurality of video signal output sections (14), (16), (18), (20) to a video display device (5) and on the video display device (5), the video data that is indicated by a video data switching device (1) is selectively displayed, wherein the video display device (5) comprising; a latch signal generation circuit (40) for generating a latch signal (27) for latching either one of the n number of different video data (13), (15), (17), (19) on the transmission line (8) in accordance with a video switching signal output (2) from the video data switching device (1), and a latch circuit (37) for latching a prescribed video data on the transmission line (8) by the latch signal (27).

## Description

### BACKGROUND OF THE INVENTION

### Field of the Invention.

The present invention relates to a video transmission apparatus and, more particularly, to a video transmission apparatus that is arranged to multiplex video data.

### Description of the Related Art

A video transmission apparatus illustrated in Fig. 15 is the one which is described in Japanese Patent Publication (KOKAI) No. 10-224753.

However, in the above-described video transmission apparatus, there was the drawback that a plurality of video data, the pixels number of which are different, could not be transmitted with use of a single transmission line by being multiplexed.

### SUMMARY OF THE INVENTION

An object of the present invention is to provide a novel video transmission apparatus that has eliminated the drawback inherent in the above-described conventional technique, especially has enabled the transmission of a plurality of video data with use of a single transmission line and also has enabled the transmission of video data, the picture-image sizes of which are different with use of a single transmission line.

To attain the above object, the present invention adopts the technical constructions that are described as follows.

Specially a first aspect of the present invention is a video transmission apparatus in which an n (the n represents an integer of 2 or more) number of different video data are transmitted via a single transmission line from a plurality of video signal output section to a video display device, and on the video display device, the video data that is indicated by a video data switching device is selectively displayed, wherein the video display device comprising; a latch signal generation circuit for generating a latch signal for latching either one of the n number of different video data on the transmission line in accordance with a video switching signal output from the video data switching device, and a latch circuit for latching a prescribed video data on the transmission line by the latch signal.

A second aspect of the present invention is a video transmission apparatus in which an n (the n represents an integer of 2 or more) number of different video data are transmitted via a single transmission line from a plurality of video signal output section to a video display device, and on the video display device, the video data that is indicated by a video data switching device is selectively displayed, wherein the video signal output section comprising; a delay means for delaying a phase pulse for controlling a transmission timing of the video signal output section (n-1) times, and generating an (n-1) number of delay pulses, each delay time of which is different from one another, respectively, and a selector for sequentially selecting a prescribed video data so as to perform time division of said n number of different video data in accordance with said phase pulse and said (n-1) number of delay pulses, and the video display device comprising; a latch signal generation circuit for generating a latch signal for latching either one of the n number of different video data on the transmission line in accordance with a video switching signal output from the video data switching device, and a latch circuit for latching a prescribed video data on the transmission line by the latch signal.

A third aspect of the present invention is a video transmission apparatus in which an n (the n represents an integer of 2 or more) number of different video data are transmitted via a single transmission line from a plurality of video signal output section to a video display device, and on the video display device, the video data that is indicated by a video data switching device is selectively displayed, wherein the video display device comprising; a latch signal generation circuit for delaying a phase pulse for controlling a receiving timing of the video display device (n-1) times, and generating an (n-1) number of delay pulses, each delay time of which is different from one another, respectively, a selector for selecting either one of the (n-1) number of delay pulses and the phase pulse in accordance with the video switching signal output from the video data switching device, and a latch circuit for latching a prescribed video data on the transmission line by the latch signal.

A fourth aspect of the present invention is a video transmission apparatus in which an n (the n represents an integer of 2 or more) number of different video data are transmitted via a single transmission line from a plurality of video signal output section to a video display device, and on the video display device, the video data that is indicated by a video data switching device is selectively displayed, wherein the video signal output section comprising; a delay means for delaying a phase pulse for controlling a transmission timing of the video signal output section (n-1) times, and generating an (n-1) number of delay pulses, each delay time of which is different from one another, respectively, and a selector for sequentially selecting a prescribed video data so as to perform time division of said n number of different video data in accordance with said phase pulse and said (n-1) number of delay pulses, and the video display device comprising; a latch signal generation circuit for delaying a phase pulse for controlling a receiving timing of the video display device (n-1) times, and generating an (n-1) number of delay pulses, each delay time of which is different from one another, respectively, a selector for selecting either one of the (n-1) number of delay pulses and the phase pulse in accordance with the video switching signal output from the video data switching device, and a latch circuit for latching a prescribed video data on the transmission line by an output signal from the selector.

A fifth aspect of the present invention is a video transmission apparatus in which an m (the m represents an integer of 2 or more) number of different video data having a small picture-image size and a first number of pixels, and a video data having a large picture-image size and a second number of pixels, pixels number of which is m times as great as the first number of pixels, are transmitted via a single transmission line to a plurality of video display devices, on a first video display device for displaying the video data having the first number of pixels, the video data that is indicated by a video data switching device is selectively displayed, and on a second video display device for displaying the video data having the second number of pixels, the video data having the second number of pixels is displayed, wherein the first video display device comprising; a latch signal generation circuit for generating a first latch signal for latching either one of the m number of different video data on the transmission line in accordance with a video switching signal output from the video data switching device, and a latch circuit for latching a prescribed video data on the transmission line by the first latch signal, and the second video display device comprising; a latch signal generation circuit for generating a second latch signal for latching the video data having the second number of pixels on the transmission line, and a latch circuit for latching the video data having the second number of pixels on the transmission line by the second latch signal.

A sixth aspect of the present invention is a video transmission apparatus in which an m (the m represents an integer of 2 or more) number of different video data having a small picture-image size and a first number of pixels, and a video data having a large picture-image size and a second number of pixels, pixels number of which is m times as great as the first number of pixels, are transmitted via a single transmission line to a plurality of video display devices, on a first video display device for displaying the video data having the first number of pixels, the video data that is indicated by a video data switching device is selectively displayed, and on a second video display device for displaying the video data having the second number of pixels, the video data having the second number of pixels is displayed, wherein the first video display device comprising; a latch signal generation circuit for delaying a phase pulse for controlling a receiving timing of the video display device m times, and generating an m number of delay pulses, each delay time of which is different from one another, respectively, a selector for selecting either one of the m number of delay pulses in accordance with the video switching signal output from the video data switching device, and a latch circuit for latching the video data having the first number of pixels on the transmission line by an output signal from the selector, and the second video display device comprising; a latch signal generation circuit for delaying a phase pulse for controlling a receiving timing of the video display device (m-1) times, and generating an (m-1) number of delay pulses, each delay time of which is different from one another, respectively, an OR circuit, input signals of which are the phase pulse and the (m-1) number of delay pulses, and a latch circuit for latching the video data having the second number of pixels on the transmission line by an output signal from the OR circuit.

### BRIEF DESCRIPTION OF THE DRAWINGS

Fig. 1 is a block diagram showing a video transmission apparatus according to a first embodiment of the present invention.
Fig. 2 is a block diagram showing the video display apparatus of Fig. 1.
Fig. 3 is a block diagram showing the timing clock generator of the video signal output section.
Fig. 4 is a diagram showing the latch circuit of the video display apparatus.
Fig. 5 is a block diagram showing the latch signal generation circuit of the video display apparatus.
Fig. 6 is a timing chart illustrating the first embodiment of the present invention.
Fig. 7 is a block diagram showing a video transmission apparatus according to a second embodiment of the present invention;
Fig. 8 is a block diagram showing the video display apparatus for displaying a picture image, the pixels number of which is great.
Fig. 9 is a block diagram showing the video display apparatus for displaying a picture image, the pixels number of which is small.
Fig. 10 is a block diagram showing the latch signal generation circuit of the video display apparatus for displaying a picture image, the pixels number of which is great.
Fig. 11 is a block diagram showing the latch signal generation circuit of the video display apparatus for displaying a picture image, the pixels number of which is small.
Fig. 12 is a block diagram showing the selector control circuit provided within a multiplex circuit of the video signal output section.
Fig. 13 is a timing chart showing the second embodiment of the present invention.
Fig. 14 is another timing chart showing the second embodiment of the present invention.

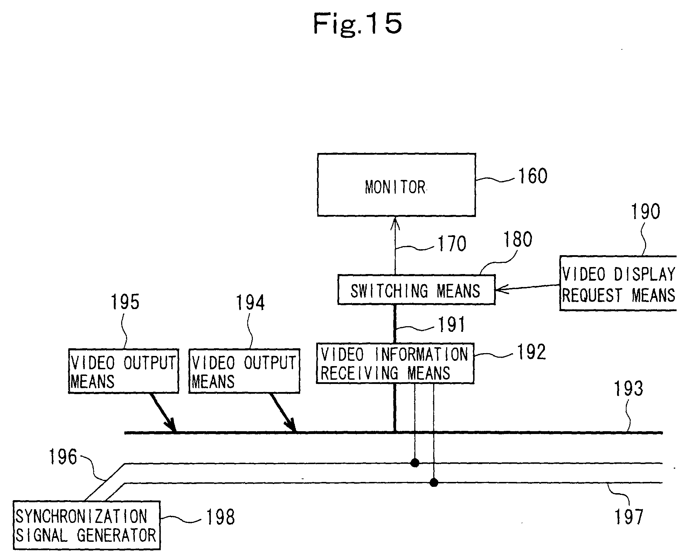

Fig. 15 is a block diagram showing a conventional technique.

### DETAILED DESCRIPTION OF THE PREFERRED EMBODIMENTS

An embodiment of a video transmission apparatus according to the present invention will now be explained in detail with reference to the drawings.

### (First Embodiment)

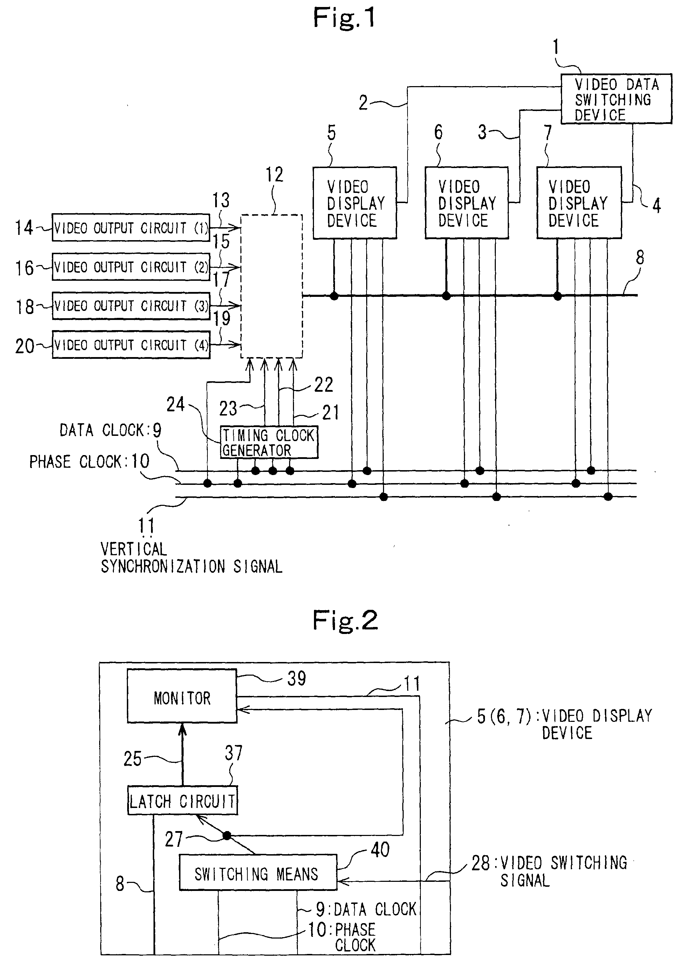

Figs. 1 to 6 are drawings illustrating a first embodiment of a video transmission apparatus according to the present invention.

In these figures, there is illustrated a video transmission apparatus in which an n (the n represents an integer of 2 or more) number of different video data 13, 15, 17, 19 are transmitted via a single transmission line 8 from a plurality of video signal output sections 14, 16, 18, 20 to a video display device 5 and on the video display device 5, the video data that is indicated by a video data switching device 1 is selectively displayed, wherein the video display device 5 comprising; a latch signal generation circuit 40 for generating a latch signal 27 for latching either one of the n number of different video data 13, 15, 17, 19 on the transmission line 8 in accordance with a video switching signal output 2 (28) from the video data switching device 1, and a latch circuit 37 for latching a prescribed video data on the transmission line 8 by the latch signal 27.

Also, there is illustrated a video transmission apparatus in which an n (the n represents an integer of 2 or more) number of different video data 13, 15, 17, 19 are transmitted via a single transmission line 8 from a plurality of video signal output sections 14, 16, 18, 20 to a video display device 5 and on the video display device 5, the video data that is indicated by a video data switching device 1 is selectively displayed, wherein the video signal output section comprising; a delay means 24 for delaying a phase pulse 10 for controlling a transmission timing of the video signal output section (n-1) times, and generating an (n-1) number of delay pulses 23, 22, 21, each delay time of which is different from one another, respectively, and a selector 12 for sequentially selecting a prescribed video data so as to perform time division of the n number of different video data 13, 15, 17, 19, in accordance with the phase pulse 10 and the (n-1) number of delay pulses 23, 22, 21, and the video display device 5 comprising; a latch signal generation circuit 40 for generating a latch signal 27 for latching either one of the n number of different video data 13, 15, 17, 19 on the transmission line 8 in accordance with a video switching signal 2 output from the video data switching device 1, and a latch circuit 37 for latching a prescribed video data 13, 15, 17, 19 on the transmission line 8 by the latch signal 27.

Also, there is illustrated a video transmission apparatus in which an n (the n represents an integer of 2 or more) number of different video data 13, 15, 17, 19 are transmitted via a single transmission line 8 from a plurality of video signal output sections 14, 16, 18, 20 to a video display device 5 and on the video display device 5, the video data that is indicated by a video data switching device 1 is selectively displayed, wherein the video display device 5 comprising; a latch signal generation circuit 40 for delaying a phase pulse 10 for controlling a receiving timing of the video display device 5 (n-1) times, and generating an (n-1) number of delay pulses 32, 31, 30, each delay time of which is different from one another, respectively, a selector 29 for selecting either one of the (n-1) number of delay pulses 32, 31, 30 and the phase pulse 10 in accordance with the video switching signal 2 output from the video data switching device 1, and a latch circuit 37 for latching a prescribed video data 13, 15, 17, 19 on the transmission line 8 by an output signal 27 from the selector 29.

The first embodiment will hereafter be explained further in detail.

Fig. 1 is a block diagram of the present invention. Selection signals 21 to 23 from a timing clock generator 24 and the phase clock 10 operationally switch the 4-input/1-output selector 12, and video signals from a plurality of video output devices 14, 16, 18 and 20 are transmitted onto a video data transmission line 8 from the 4-input/1-output selector 12 by being sequentially time-divided. The video data switching device 1 instructs video display devices 5, 6 and 7 to display video data to be displayed on the video data transmission line 8, by outputting video switching signals 2, 3 and 4, respectively.

Fig. 2 is a block diagram illustrating the video display device 5, 6, or 7 of Fig. 1.

The latch circuit 37 latches the video data on the transmission line 8 at the rising edge of an output 27 from switching means 40, and outputs the thus-latched video data 25 to a monitor 39. The vertical synchronization signal 11 and the output 27 are input to the monitor 39, thereby generating a horizontal synchronization signal that suits to the size of the monitor 39. The monitor 39 makes a display of the contents of the video data 25 according to the thus-generated horizontal synchronization signal and the vertical synchronization signal 11.

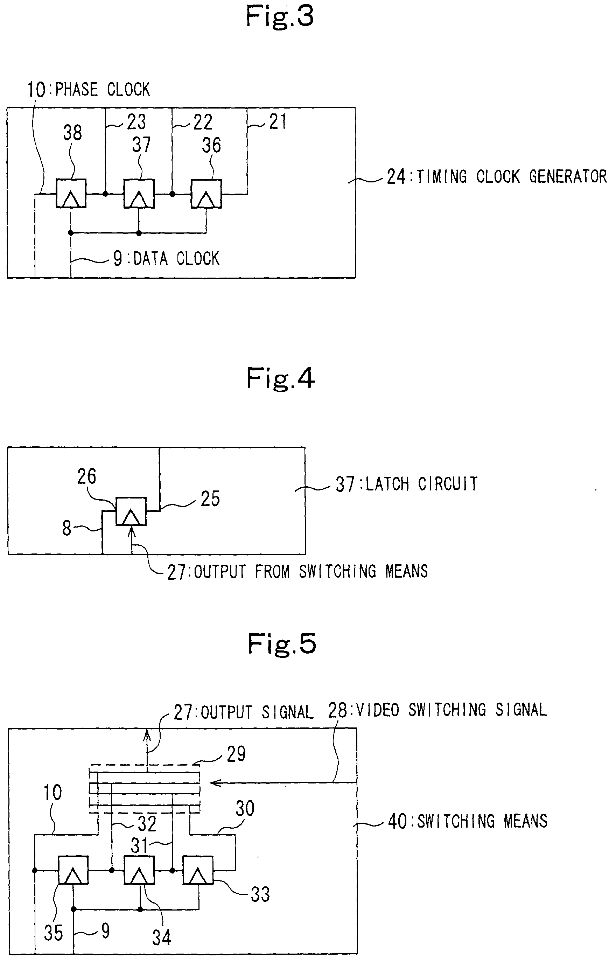

Fig. 3 is a block diagram illustrating the construction of the timing clock generator 24 of Fig. 1. Reference numerals 38, 37, and 36 each denote a flip-flop. The flip-flop 38 latches the phase clock 10 at the rising edge of a data clock 9. And it outputs to the selector 12 a phase clock 23 that has been delayed one clock with respect to the phase clock 10. The flip-flop 37 outputs to the selector 12 a phase clock 22 that has been delayed two clocks with respect to the phase clock 10. Similarly, the flip-flop 36 outputs to the selector 12 a phase clock 21 that has been delayed three clocks with respect to the phase clock 10.

Fig. 4 illustrates the latch circuit 37 of Fig. 2. A flip-flop 26 latches video data of the video data transmission line 8 at the rising edge of the output 27 from the switching means 40 and outputs the thus-latched video data 25.

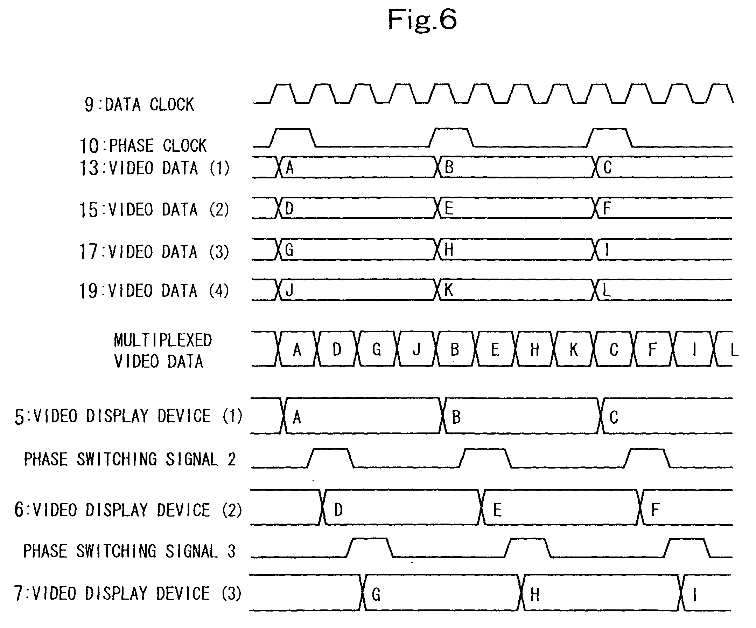

Fig. 5 illustrates the switching means 40 of Fig. 2. Reference numerals 35, 34, and 33 each denote a flip-flop. The flip-flop 35 latches the phase clock 10 at the rising edge of a data clock 9 and outputs to the selector 29 a phase clock 32 that has been delayed one clock with respect to the phase clock 10. The flip-flop 34 outputs to the selector 29 a phase clock 31 that has been delayed two clocks with respect to the phase clock 10. Similarly, the flip-flop 33 outputs to the selector 29 a phase clock 30 that has been delayed three clocks with respect to the phase clock 10.

The phase clock 10 and the phase clocks 32, 31, and 30 are input to the selector 29, and in accordance with the video switching signal 28 from the video data switching device 1, either one of those clocks is selected by the selector 29 and the selected clock is output as the output 27.

Fig. 6 is a timing chart in which a video data 1 is displayed on the video display device 5, a video data 2 is displayed on the video display device 6, and a video data 3 is displayed on the video display device 7.

Next, the operation of the circuit 1 of Fig. 1 will be explained with reference to the timing chart of Fig. 6.

The video output circuits 14, 16, 18 and 20 each output a picture, the size of which is the same and the frame frequency of which is the same.

An initial pixel of a 1-frame of the video data is synchronized with the vertical synchronization signal 11. Each pixel of the video data is synchronized with the data clock 9. The vertical synchronization signal 11 and the phase clock 10 are each synchronized with the data clock 9. The video data 13, 15, 17 and 19 output from the video output circuits 14, 16, 18 and 20 are each renewed at the frequency of one time every four periods of the data clock. The video data 13, 15, 17 and 19 are sequentially time-divided every one period of the data clock 9 in accordance with the phase clocks 10, 23, 22 and 21, thereby the video data 13, 15, 17, and 19 are sequentially output onto the video data transmission line 8 from the 4-input/1-output selector 12. Accordingly, in synchronization with the data clock 9, the video data A, D, G, J, B, E, H and K are output onto the video data transmission line 8 in the order mentioned.

On the other hand, in case of displaying the video data 13 on the video display device 5, the video data switching device 1 outputs the video switching signal 2 (the symbol 28 of Fig. 5) so that the 4-input/1-output selector 29 of Fig. 5 selects the phase clock 10. Accordingly, the phase clock 10 is output as the output signal 27 of Fig. 5 (or Fig. 2) from the 4-input/1-output selector 29. The latch circuit 37 of Fig. 2 latches the data A of the video data 13 of the video data transmission line 8 at the rising edge of the output 27, i.e. the rising edge of the phase clock 10. The latched data A is output to the monitor 39 of the video display device 5 and is displayed thereon.

Also, in synchronization with the data clock 9 at a fifth clock pulse thereafter, the data B of the video data 13 of the video data transmission line 8 is latched at the rising edge of the phase clock 10. The latched data is output to the monitor. In this way, the video data 13 is sequentially latched at the rising edge of the phase clock 10, and the latched data is displayed on the monitor 39 of the video display device 5.

Further, in case of displaying the video data 15 on the video display device 6, the video data switching device 1 outputs the video switching signal 3 (the symbol 28 of Fig. 5) so that the 4-input/1-output selector 29 of Fig. 5 selects the phase clock 32 that has been delayed by one period of the data clock.

The latch circuit 37 latches the data D of the video data 15 of the video data transmission line 8 at the rising edge of the phase clock 32. The latched data D is output to the monitor 39 of the video display device 6 and is displayed thereon. Also, in synchronization with the data clock 9 at a fifth clock pulse thereafter, the data E of the video data 15 of the video data transmission line 8 is latched at the rising edge of the phase clock 32. The latched data E is output to the monitor. In this way, the video data 15 is sequentially latched at the rising edge of the phase clock 32, and the latched data is displayed on the monitor 39 of the video display device 6. The video data 15 is sequentially input to the monitor 39 from the latch circuit 37, thereby the video data 15 is displayed on the video display device 6.

Similarly, in case of displaying the video data 17 on the video display device 7, the video data switching device 1 outputs a video switching signal 4 so that the 4-input/1-output selector 29 of Fig. 5 selects the phase clock 31 that has been delayed by two periods of the data clock. The thereafter-succeeding operations are the same as in the case of each of the video display devices 5 and 6.

Since the video data 13 output from the video output device 14 is output onto the video transmission line 8 as described above, the data transmission rate thereof becomes 4 times higher. However, the data transmission rate when inputting the video data 13 to the monitor 39 is decreased to 1/4, so that it is possible to use a conventional-standard device such as an NTSC, and therefore it becomes possible to perform multiplex transmission at a low cost.

### (Second Embodiment)

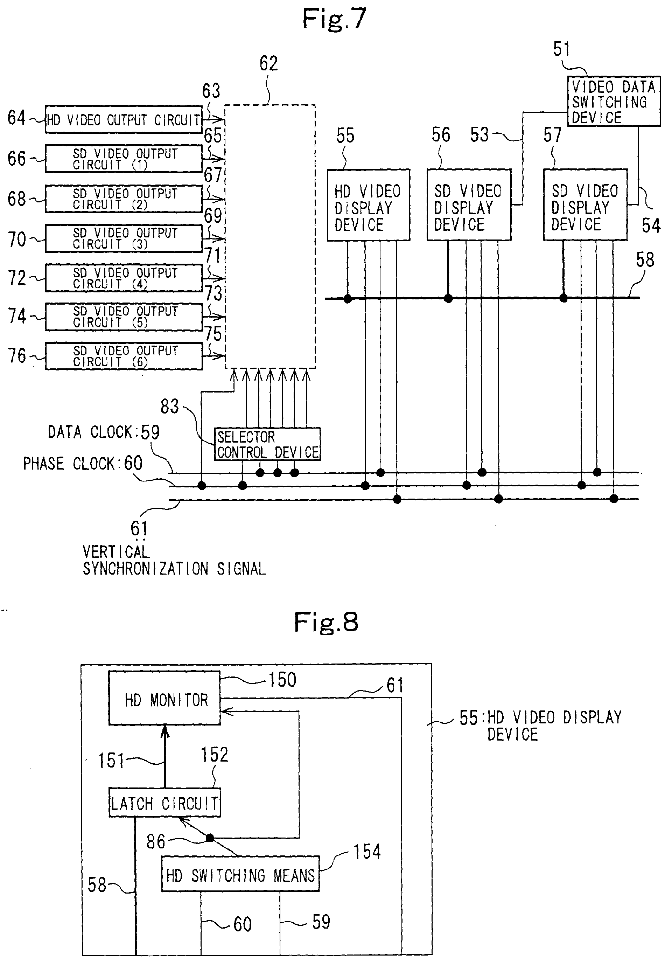

Figs. 7 to 14 are drawings illustrating a second embodiment of the video transmission apparatus according to the present invention.

In these figures, there is illustrated a video transmission apparatus in which an m (the m represents an integer of 2 or more) number of different video data 65-75 having a small picture-image size and a first number of pixels, and a video data 63 having a large picture-image size and a second number of pixels, pixels number of which is m times as great as said first number of pixels, are transmitted via a single transmission line 58 to a plurality of video display devices 55-57, on a first video display device 56 for displaying the video data 65-75 having the first number of pixels, the video data that is indicated by a video data switching device 51 is selectively displayed, and on a second video display device 55 for displaying the video data 63 having the second number of pixels, the video data 63 having the second number of pixels is displayed, wherein the first video display device 56 (referred to as an "SD video display device") comprising; a latch signal generation circuit 158 for generating a first latch signal 110 for latching either one of the m number of different video data (referred to as an "SD video data") 65-75 on the transmission line 58 in accordance with a video switching signal 53 (112) output from the video data switching device 51, and a latch circuit 157 for latching a prescribed video data on the transmission line 58 by the first latch signal 110, and the second video display device 55 (referred to as an "HD video display device") comprising; a latch signal generation circuit 154 for generating a second latch signal 86(100) for latching said video data 63 (referred to as an "HD video data") having the second number of pixels on the transmission line 58, and a latch circuit 152 for latching the video data 63 having the second number of pixels on the transmission line 58 by the second latch signal 86(100).

Also, there is illustrated a video transmission apparatus having a first video display device 56 and a second video display device 55, wherein the first video display device 56 comprising; a latch signal generation circuit 158 for delaying a phase pulse 60 for controlling a receiving timing of the video display device 56 m times, and generating an m number of delay pulses 118-113, each delay time of which is different from one another, respectively, a selector 111 for selecting either one of the m number of delay pulses 118-113 in accordance with the video switching signal 53 (112) output from the video data switching device 51, and a latch circuit 157 for latching the video data 65-75 having the first number of pixels on the transmission line 58 by an output signal 110 from the selector 111, and the second video display device 55 comprising; a latch signal generation circuit 154 for delaying a phase pulse 60 for controlling a receiving timing of the video display device 55 (m-1) times, and generating an (m-1) number of delay pulses 92-88, each delay time of which is different from one another, respectively, an OR circuit 87, input signals of which are the phase pulse 60 and the (m-1) number of delay pulses 92-88, and a latch circuit 152 for latching the video data 63 having the second number of pixels on the transmission line 58 by an output signal 100 from the OR circuit 87.

The second embodiment will hereafter be explained further in detail.

Fig. 7 illustrates an example in which the following two kinds of picture-image data, the sizes of which differ from each other, are multiplex-transmitted and displayed. One kind of picture image data has a small picture-image size of horizontal 720 pixels and vertical 480 lines and a first number of pixels. The other kind of picture image data has a large picture-image size of horizontal 1920 pixels and vertical 1080 lines and a second number of pixels.

Fig. 8 shows the block diagram of a video display device for use for the video data, the size of which is large and that has the second number of pixels. The latch circuit 152 latches video data on the transmission line 58 at the rising edge of the output signal 86 from the HD switching means (the latch signal generation circuit) 154. The latched signal 151 is output to the HD monitor 150. Simultaneously, the vertical synchronization signal 61 and the output signal 86 are input to the monitor 150, thereby producing a horizontal synchronization signal that suits to the size of the monitor. The monitor 150 makes a display of the contents of the video data 151 in accordance with the produced horizontal synchronization signal and the vertical synchronization signal 61.

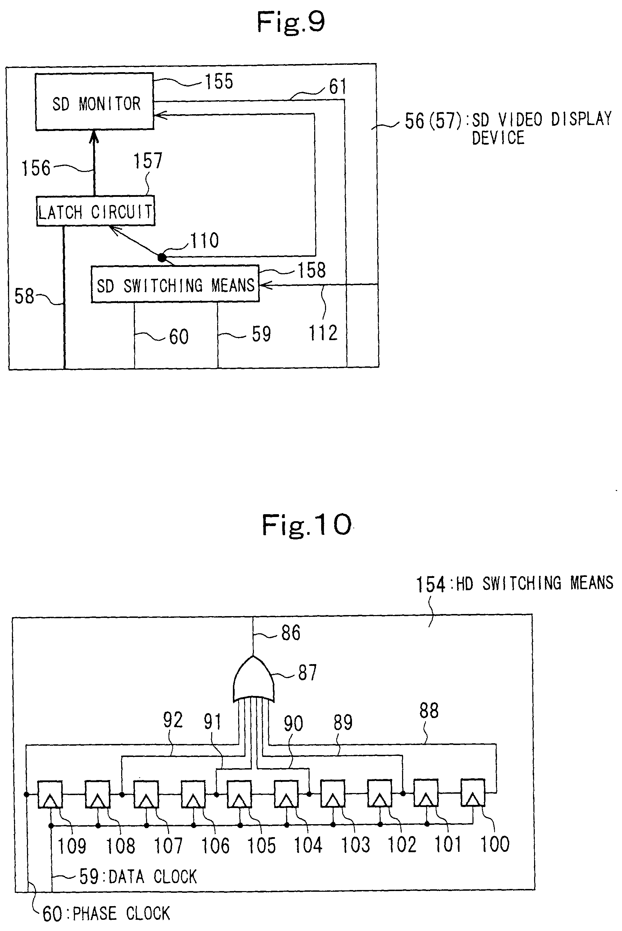

Fig. 9 shows the block diagram of a video display device for use for the video data, the size of which is small and that has the first number of pixels. The latch circuit 157 latches video data on the transmission line 58 at the rising edge of the output signal 110 from the SD switching means (the latch signal generation circuit) 158. The latched signal 156 is output to the SD monitor 155. Simultaneously, the vertical synchronization signal 61 and the output signal 110 are input to the monitor 155, thereby producing a horizontal synchronization signal that suits to the size of the monitor. The monitor 150 makes a display of the contents of the video data 156 in accordance with the produced horizontal synchronization signal and the vertical synchronization signal 61.

Fig. 10 shows the HD switching means 154 of Fig. 8, which performs OR operation of the following six signals by the OR circuit 87 so as to generate the HD switching output signal 86. Namely, input signals of the OR circuit 87 are the phase clock 60, the phase clock 92 that has been delayed by two periods of the data clock, the phase clock 91 that has been delayed by four periods of the data clock, the phase clock 90 that has been delayed by six periods of the data clock, the phase clock 89 that has been delayed by eight periods of the data clock, and the phase clock 88 that has been delayed by ten periods of the data clock.

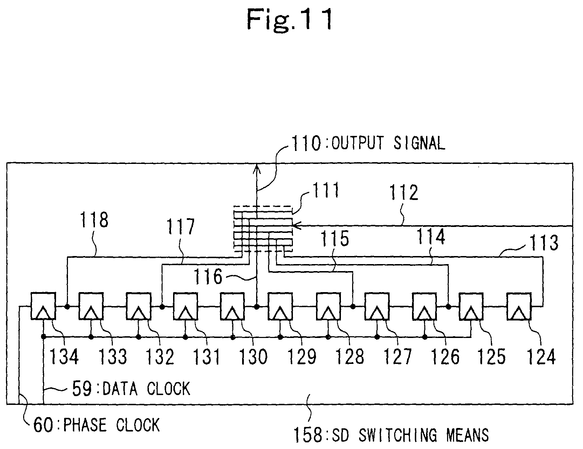

Fig. 11 shows the SD switching means 158 of Fig. 9, which produces the following phase clock signals. The SD switching means 158 selects a prescribed one clock from those phase clock signals in accordance with the video switching signal 112. And selected clock is output as the switcher output signal 110 to the latch circuit 152. Those phase clock signals are the phase clock 118 that has been delayed by one period of the data clock 59, the phase clock 117 that has been delayed by three periods of the data clock 59, the phase clock 116 that has been delayed by five periods of the data clock 59, the phase clock 115 that has been delayed by seven periods of the data clock 59, the phase clock 114 that has been delayed by nine periods of the data clock 59, and the phase clock 113 that has been delayed by eleven periods of the data clock 59.

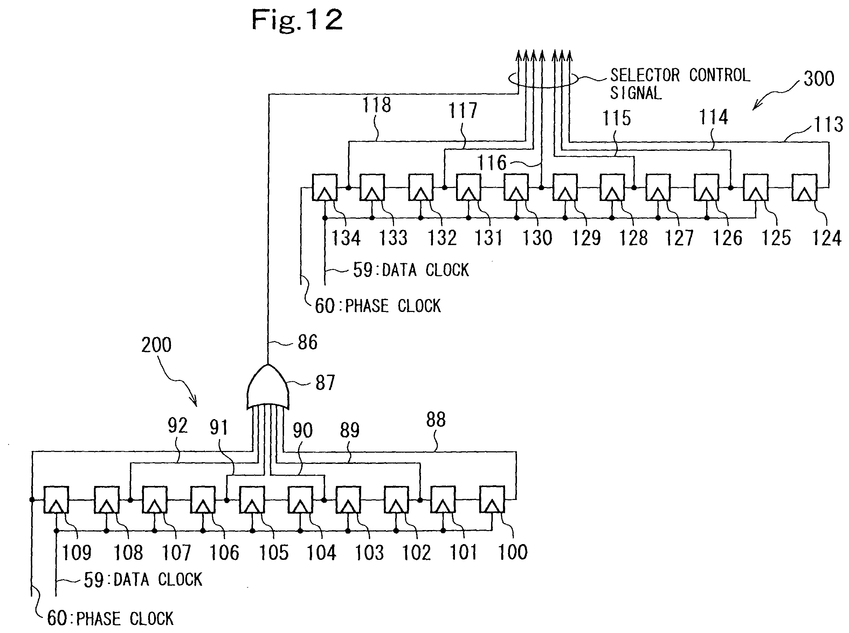

Fig. 12 is a block diagram showing a multiplexing circuit on the signal transmission side. There are provided transmission means 200 for transmitting the video data 63 having the second number of pixels and a large picture image size onto the transmission line 58 at intervals, and transmission means 300 for sequentially transmitting six pieces of video data 65, 67, 69, 71, 73 and 75 having a small picture image size and the first number of pixels onto the transmission line 58, when the video data 63 having the second pixels number are not being transmitted. Those video data are multiplexed and transmitted.

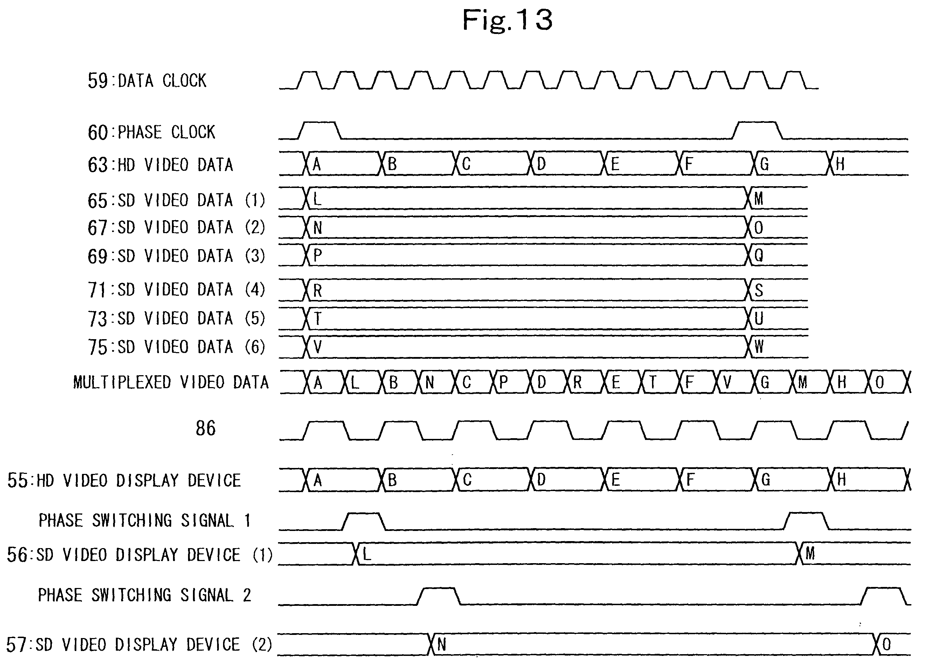

Fig. 13 is a timing chart in which, the HD video data 63 is displayed on the HD video display device 55 and the SD video data 65 is displayed on the SD video display device 56.

An explanation will hereafter be given of a method of transmitting video data, the picture-image sizes of which are different from one another by multiplexing them and of receiving the multiplexed data.

Before starting the explanation, different sizes of video data will be defined. In a digital television, there is the need to display two standardized picture-image sizes. One is an HD standard having horizontal 1920 pixels and vertical 1080 lines, while the other is an SD standard having horizontal 720 pixels and vertical 480 lines. The ratio of the pixels number per image screen in the HD standard to that of SD standard is 6 : 1. In case of transmitting these two picture images with use of the single video-data transmission line 58, it results that with respect to transmitting of the HD 1 pixel the SD pixel may be transmitted only 1/6 thereof. Here, an explanation is given of the method of transmitting SD 6-screen images and HD 1-screen image that enables simplifying the circuit construction.

The SD picture-image output circuits 66, 68, 70, 72, 74 and 76 each are outputting the same size of picture image. The HD picture-image output circuit 64 is outputting pixels that are six times as large in number as those of one SD picture-image output circuit at a speed that is six times as high.

An initial pixel of the video data is synchronized with the vertical synchronization signal 61, and each pixel of the video data is synchronized with the data clock 59. Also, the vertical synchronization signal 61 and the phase clock 60 are each synchronized with the data clock 59. The video data 65, 67, 69, 71, 73 and 75 each are renewed at the frequency of one time per 12 periods of the data clock 59. The video data 63 is renewed at the frequency of one time per 2 periods of the data clock. By the operation of the 6-input/1-output selector 62, the video data is time-divided per one period of the data clock and is multiplexed in the order of A, L, B, N, C, P, D, R, E, T, F, V, G and M. Then, the time-divided picture image data are output to the video data transmission line 58 in that order.

In the case in which the video data 63 of the picture image data that have been multiplexed in that way is displayed onto the video display device 55, the output 86 of the 6-input OR circuit 87 of Fig. 10 becomes 6 times as high in frequency as the phase clock 60 as illustrated in the timing chart of Fig. 13. With this frequency, the latch circuit 152 of Fig. 8 latches the HD picture images on the transmission line 58, so that, the picture image data, the number of pixels of which is large become able to be reproduced on the video display device 55 in the order of A, B, C, D, E and F.

On the other hand, in a case in which the video data 65 is displayed on the SD video display device 56, the video data switching device 51 outputs the video switching signal 53 (the symbol 112 of Fig. 11) so that the 6-input/1-output selector 111 of Fig. 11 selects the phase clock 118 that has been delayed by one period of the data block 59. Accordingly, the picture image data L is reproduced on the SD video display device 56, and, further, after 12 clocks, the picture image data M is reproduced on the SD video display device 56. Also, when the video data 67 is displayed on the SD video display device 57, the video data switching device 51 outputs the video switching signal 54 so that the 6-input/1-output selector 111 of Fig. 11 selects the phase clock 117 that has been delayed by three periods of the data clock 59. Accordingly, the picture image data N is reproduced on the SD video display device 57, and, further, after 12 clocks, the picture image data O is reproduced on the SD video display device 57.

As described above, the video data output from the HD video output device 64 and the video data output from the SD video output devices 66 to 76 are transmitted onto the transmission line 58 by being multiplexed. Therefore, the transmission rate of the HD video data becomes twice as high, and the transmission rate of the SD video data becomes 12 times as high. However, at the time of inputting the data to the HD monitor 150 of Fig. 8, the transmission rate of input data to the HD monitor 150 is made 1/2 as high, so that, with respect to the video output device 64 and the HD monitor 150, there can be used the ones having the same standard as in the prior art, respectively. Therefore, it is possible to achieve the cost reduction. Similarly, at the time of inputting to the SD monitor 155 of Fig. 9, the data rate is made 1/12 as high. Therefore, with respect to the video output device 66 and the HD monitor 155, there can be used the ones having the same standard as in the prior art, respectively. Therefore, it is possible to achieve the cost reduction. Of course, the same applies also to the case with the SD video display device 57.

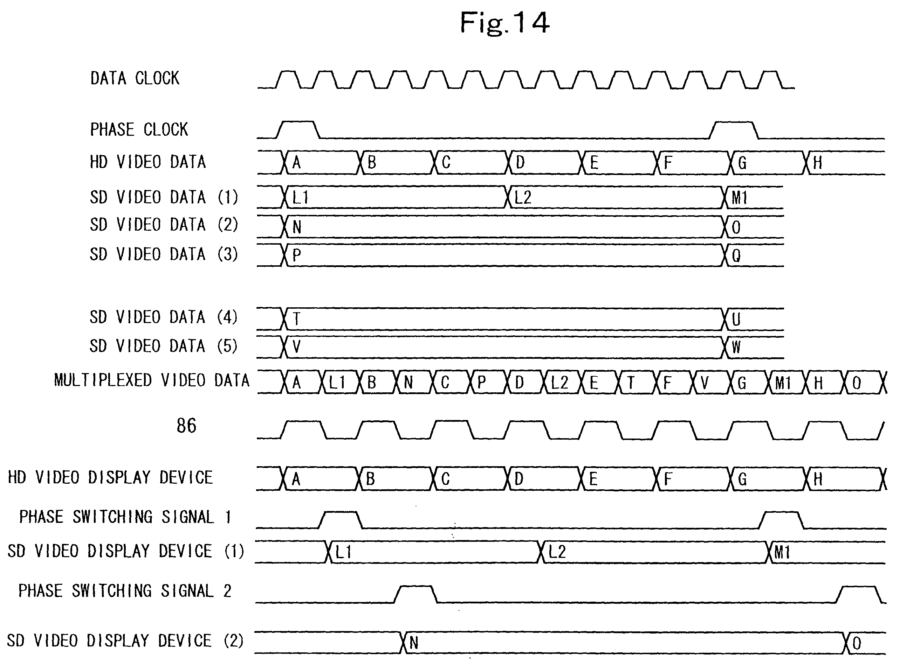

Fig. 14 is a timing chart in which five pieces of SD video data (2)-(5), the pixels number of which is the smallest, another SD video data (1), the pixels number of which is twice as great as that of the SD video data (2)-(5), and the above-described HD video data are multiplexed and respective ones of these video data are displayed.

Since the video transmission apparatus according to the present invention has been constructed as described above, the following advantages are brought about.
(1) It is possible to transmit on a single transmission path a picture image, the size of which is large and a plurality of picture images, the sizes of which are small.
(2) It is possible to transmit on a single transmission path a picture image, the size of which is large, and a plurality of picture images, the sizes of which are small and a plurality of picture images, the sizes of which are middle.

## Claims

1. A video transmission apparatus in which an n (the n represents an integer of 2 or more) number of different video data are transmitted via a single transmission line from a plurality of video signal output section to a video display device, and on said video display device, said video data that is indicated by a video data switching device is selectively displayed, wherein
said video display device comprising;
a latch signal generation circuit for generating a latch signal for latching either one of said n number of different video data on said transmission line in accordance with a video switching signal output from said video data switching device, and
a latch circuit for latching a prescribed video data on said transmission line by said latch signal.

2. A video transmission apparatus in which an n (the n represents an integer of 2 or more) number of different video data are transmitted via a single transmission line from a plurality of video signal output section to a video display device, and on said video display device, said video data that is indicated by a video data switching device is selectively displayed, wherein
said video signal output section comprising;
a delay means for delaying a phase pulse for controlling a transmission timing of said video signal output section (n-1) times, and generating an (n-1) number of delay pulses, each delay time of which is different from one another, respectively, and
a selector for sequentially selecting a prescribed video data so as to perform time division of said n number of different video data in accordance with said phase pulse and said (n-1) number of delay pulses, and
said video display device comprising;
a latch signal generation circuit for generating a latch signal for latching either one of said n number of different video data on said transmission line in accordance with a video switching signal output from said video data switching device, and
a latch circuit for latching a prescribed video data on said transmission line by said latch signal.

3. A video transmission apparatus in which an n (the n represents an integer of 2 or more) number of different video data are transmitted via a single transmission line from a plurality of video signal output section to a video display device, and on said video display device, said video data that is indicated by a video data switching device is selectively displayed, wherein
said video display device comprising;
a latch signal generation circuit for delaying a phase pulse for controlling a receiving timing of said video display device (n-1) times, and generating an (n-1) number of delay pulses, each delay time of which is different from one another, respectively,
a selector for selecting either one of said (n-1) number of delay pulses and said phase pulse in accordance with said video switching signal output from said video data switching device, and
a latch circuit for latching a prescribed video data on said transmission line by an output signal output from said selector.

4. A video transmission apparatus in which an n (the n represents an integer of 2 or more) number of different video data are transmitted via a single transmission line from a plurality of video signal output section to a video display device, and on said video display device, said video data that is indicated by a video data switching device is selectively displayed, wherein
said video signal output section comprising;
a delay means for delaying a phase pulse for controlling a transmission timing of said video signal output section (n-1) times, and generating an (n-1) number of delay pulses, each delay time of which is different from one another, respectively, and
a selector for sequentially selecting a prescribed video data so as to perform time division of said n number of different video data in accordance with said phase pulse and said (n-1) number of delay pulses, and
said video display device comprising;
a latch signal generation circuit for delaying a phase pulse for controlling a receiving timing of said video display device (n-1) times, and generating an (n-1) number of delay pulses, each delay time of which is different from one another, respectively,
a selector for selecting either one of said (n-1) number of delay pulses and said phase pulse in accordance with said video switching signal output from said video data switching device, and
a latch circuit for latching a prescribed video data on said transmission line by an output signal from said selector.

5. A video transmission apparatus in which an m (the m represents an integer of 2 or more) number of different video data having a small picture-image size and a first number of pixels, and a video data having a large picture-image size and a second number of pixels, pixels number of which is m times as great as said first number of pixels, are transmitted via a single transmission line to a plurality of video display devices, on a first video display device for displaying said video data having said first number of pixels, said video data that is indicated by a video data switching device is selectively displayed, and on a second video display device for displaying said video data having said second number of pixels, said video data having said second number of pixels is displayed, wherein
said first video display device comprising;
a latch signal generation circuit for generating a first latch signal for latching either one of said m number of different video data on said transmission line in accordance with a video switching signal output from said video data switching device, and
a latch circuit for latching a prescribed video data on said transmission line by said first latch signal, and
said second video display device comprising;
a latch signal generation circuit for generating a second latch signal for latching said video data having said second number of pixels on said transmission line, and
a latch circuit for latching said video data having said second number of pixels on said transmission line by said second latch signal.

6. A video transmission apparatus in which an m (the m represents an integer of 2 or more) number of different video data having a small picture-image size and a first number of pixels, and a video data having a large picture-image size and a second number of pixels, pixels number of which is m times as great as said first number of pixels, are transmitted via a single transmission line to a plurality of video display devices, on a first video display device for displaying said video data having said first number of pixels, said video data that is indicated by a video data switching device is selectively displayed, and on a second video display device for displaying said video data having said second number of pixels, said video data having said second number of pixels is displayed, wherein
said first video display device comprising;
a latch signal generation circuit for delaying a phase pulse for controlling a receiving timing of said video display device m times, and generating an m number of delay pulses, each delay time of which is different from one another, respectively,
a selector for selecting either one of said m number of delay pulses in accordance with said video switching signal output from said video data switching device, and
a latch circuit for latching said video data having said first number of pixels on said transmission line by an output signal from said selector, and
said second video display device comprising;
a latch signal generation circuit for delaying a phase pulse for controlling a receiving timing of said video display device (m-1) times, and generating an (m-1) number of delay pulses, each delay time of which is different from one another, respectively,
an OR circuit, input signals of which are said phase pulse and said (m-1) number of delay pulses, and
a latch circuit for latching said video data having said second number of pixels on said transmission line by an output signal from said OR circuit.
